# EUROPEAN PATENT APPLICATION

(11) **EP 2 684 835 A1**
(43) Date of publication of application: **15.01.2014**
(21) Application number: 13172181.3
(22) Date of filing: 14.06.2013
(51) Int. Cl.: B66F 9/075, B60R 21/02, B66F 17/00

(54) **Safety gate structure for a forklift truck, or similar transport vehicle**

(30) Priority: 14.06.2012 IT PT20120006 U
(71) Applicant: Gome Energetica S.R.L., 51011 Buggiano (PT) (IT)
(72) Inventor: Tronchetti, Gustavo, 51011 Borgo a Buggiano (PT) (IT)
(74) Representative: Celestino, Marco

(57) **Abstract**

Structure of safety gate (1) for a forklift truck (100), or similar transport vehicle, having a protection cabin (120) comprising a couple of front uprights (121) and a couple of rear uprights (122) arranged at opposite sides with respect to a driver seat (50). The safety gate (1) comprises a protection portion (20) and a tilting device (15) arranged to cantilever the protection portion (20) from the front upright (121). Furthermore, the tilting device (15) is adapted to connect pivotally the protection portion (20) to a front upright (121) of the protection cabin (120). More in detail, the tilting device (15) is configured to cause a rotation of the protection portion (20) about a rotation axis (115) substantially horizontal, between an open configuration, in which the protection portion (20) is arranged in a substantially vertical position, and a closed configuration, in which the protection portion (20) is arranged laterally with respect to the driver seat (50)

## Description

### Field of the invention

The present invention relates to the field of transport vehicles, such as forklift trucks, used for lifting and handling goods in storehouses and for loading, or unloading, the goods onto, or from, a vehicle like a truck.

In particular, the present invention relates to a structure of safety gate for a transport vehicle of the type used to ensure the driver to work in safety conditions.

### Description of the prior art

As well known, in the field of transport vehicles, such as forklift trucks, the need is felt of ensuring safety conditions to the driver.

To achieve this goal, many vehicles of this kind normally have a safety cabin comprising a support structure for a protection roof. The support structure usually comprises a couple of front uprights and a couple of rear uprights above which the protection roof is installed above the drive seat.

To increase the safety conditions for the driver the cabin has at least one side gate to avoid that, in case of tilting of the vehicle, the driver is thrown out of the cabin.

The safety gates of known type provide a gate member that is hinged to the support frame of the cabin, in order to rotate about a vertical axis and to form a wing-like gate.

This kind of safety gates has, however, some drawbacks.

Firstly, the vertical axis hinges used to open and close the gate member limit the possibility to use the same. In fact, this type of solution does not allow to open the gate in case of narrow spaces like between rows of shelves of storehouses where this type of vehicle is used.

Another drawback of the safety gates of known type is that they can accidentally open, in particular owing to the stresses to which the vehicle is subjected while transporting the goods, exposing the safety of the driver to the risk of falling outside.

A type of wing gate of this type is disclosed in EP1842707A1. The gate is hinged to the rear upright about a vertical axis, whereas on the front upright the fixed part of a lock is mounted. The gate is telescopically extendable between the hinge and the lock, in order to adapt to vehicles that have different distances between the front and the rear uprights. A drawback of this type of gates is that a lock arranged opposite to the hinge and the structure for the telescopic movement causes higher weights and production costs.

### Summary of the invention

It is then a feature of the present invention to provide a structure of safety gate for a forklift truck, or similar transport vehicle, which is used also in narrow spaces such as those existing between two rows of shelves in a storehouse of goods.

It is also a feature of the present invention to provide a structure of safety gate for a forklift truck, or similar transport vehicle, which can avoid accidental opening of the gate and therefore to ensure in safety conditions during the work.

It is a further feature of the present invention to provide a structure of safety gate for a forklift truck, or similar transport vehicle, which is handy and lightweight, and of low cost, at the time ensuring a high safety level.

It is a further feature of the present invention to provide a structure of safety gate for a forklift truck, or similar transport vehicle, which is adaptable to all forklift trucks and similar vehicles, without the need of a complex structure.

It is still a feature of the present invention to provide a structure of safety gate for a forklift truck, or similar transport vehicle, which is adaptable to any forklift truck and to any size of the same.

These and other features are accomplished with one exemplary structure of safety gate for a forklift truck, or similar transport vehicle, said forklift truck having a protection cabin comprising a couple of front uprights and a couple of rear uprights arranged at opposite sides with respect to a drive seat, in particular said forklift truck having a running direction, said safety gate comprising a protection portion;
whose main feature is to provide a tilting device arranged to cantilever the protection portion from the front upright and in which
said tilting device pivotally connects said protection portion to a front upright of said protection cabin;
said tilting device is configured in such a way to cause a rotation of said protection portion about a substantially horizontal rotation axis, in particular orthogonal to the running direction, between an open configuration, in which said protection portion is arranged in a substantially vertical position, and a closed configuration, in which said protection portion is arranged laterally to the drive seat;
the protection portion has an opposite side to the tilting device;
and the protection portion has a length such that when the protection portion cantilevers in the closed configuration, the edge is located between the driver seat and the rear upright.

The technical solution of the present invention which provides to bring the safety gate from the closed configuration to the open one and vice-versa, through a rotation about a horizontal axis, allows to use the safety gate also in narrow spaces such as, for example, the lanes present between two rows of shelves of storehouses.

Furthermore, the particular embodiment allows on the one hand to arrange the gate close to the driver seat and to avoid that during the rotation of the gate about the horizontal axis the can hit against the support frame, for example against the rear upright. Such technical effect is, in particular, obtained by choosing a length of the gate suitable for arranging the rear edge of the gate between the seat back and the rear upright.

The safety gate, made as disclosed above is therefore adaptable to any forklift truck and to any size of the same. In fact, it is sufficient to anchor the tilting device to the front upright. This does not decrease the safety of the worker. In fact, since the opposite side to the tilting device would be located, in the closed configuration, in projection behind the seat, it is impossible that the worker can fall from the vehicle in case of instability, or inclination of the ground, or in case of crash, or tilting of the vehicle.

Advantageously, the tilting device comprises:
- a fixed part of integral fastening, in use, to the front upright;
- a movable part arranged to be pivotally connected to the fixed part about its horizontal rotation axis, said movable part being integral to said protection portion.

This makes it possible to steadily fasten the fixed part of the tilting device to the front upright, for example by means of fastening systems of vice type.

In particular, the tilting device can comprise an actuator equipped with:
- a hollow body connected to the front upright;
- a stem having an end slidingly mounted in the hollow body and another end connected to the protection portion, said stem of said actuator arranged to translate in said hollow body in a first direction for causing said rotation about said horizontal axis in a first direction of rotation for bringing said protection portion from said open configuration to said closed configuration, and to translate in a second direction which is opposite to the first direction for causing said rotation about said horizontal axis in a second direction of rotation opposite to the first direction of rotation for bringing said protection portion from said close configuration to said open configuration.

In particular, the stem can be hydraulically operated.

Advantageously, the actuator is associated to a locking device arranged to block said rotation of said protection portion about said horizontal axis, when said protection portion is in said closed configuration, to avoid an accidental opening of the protection portion.

Alternatively, or in addition, the locking device is adapted to block the sliding of the stem with respect to the hollow body, and therefore the rotation of the protection portion about the horizontal axis, when the protection portion is arranged in the closed configuration.

In an exemplary embodiment, the movable part has a housing and the locking device comprises a main body integral to the front upright and an elongated movable element with respect to the main body, said elongated element being movable between an advanced position in which it engages said housing and prevents said movable part from rotating with respect to said fixed part, and a back portion in which it is out of said housing and therefore does not prevent the movable part from rotating with respect to the part fixed.

Alternatively, the locking device is associated to a return means, in particular of elastic type, arranged to unlock the sliding of the stem in the hollow body, and, accordingly, the rotation of the protection portion.

Preferably, the resilient return means are operated by exercising a push on the protection portion of the carriage in a direction adapted to induce an additional rotation of the protection portion in the second direction of rotation, when the protection portion is arranged in the closed configuration.

Preferably, an actuation device is also provided that is operatively connected to a starting means arranged to start the vehicle.

In particular, the actuation device is adapted to be arranged between a start configuration, in which it allows the start starting means the vehicle, when the protection portion is arranged in the closed configuration, and a turn off configuration in which, instead, it is adapted to prevent the start means from starting the vehicle when the protection portion is arranged in the open configuration.

Advantageously, the actuation device comprises a switch that is integral to the front upright and that is electrically connected to the start means of the vehicle, said movable part of the tilting device arranged to cause the movement of the switch between the above described start configuration and the above described turn off configuration.

In particular, the movable part, at a predetermined angular position, has an activation portion. More in detail, the activation portion is adapted to operate the switch for turning it into the start configuration when the protection portion is arranged in the closed configuration.

Advantageously, the activation portion is selected from the group consisting of:
- a recessed portion;
- a protruding portion.

In a preferred exemplary embodiment the movable part comprises a cam on whose profile a feeler pin of the switch can slide, the shape of the cam being configured such that in the closed position of the gate the switch is arranged in the start configuration. In particular, the cam has a circular shape with a notch such that the switch engages the notch when the gate is in the closed position.

In particular, the protection portion of the safety gate and the movable part of the tilting device are two distinct bodies. In this case, the protection portion and the movable part comprise respective engagement portions that, in use, are configured to engage with each other. Furthermore, at least one connection element is provided arranged to fasten the engagement portions in a predetermined relative position.

Advantageously, at least one engaging portion between the engaging portion of the protection portion and the engaging portion of the movable part of the tilting device has an elongated hole. In this case the connection element is tightened for fixing the two engagement portions at a predetermined relative position, corresponding to a predetermined length of the protection portion.

According to another aspect of the invention, a structure of forklift truck, or similar transport vehicle, provides at least one safety gate as described above, and claimed in the claims from 1 to 13.

### Brief description of the drawings

The invention will be now shown with the following description of an exemplary embodiment thereof, exemplifying but not limitative, with reference to the attached drawings in which:
- Fig. 1 diagrammatically shows an elevational side view of a structure of safety gate, according to the invention, in a closed configuration installed on a forklift truck;
- Fig. 2 diagrammatically shows an elevational side view of the structure of safety gate of Fig. 1 in an open configuration;

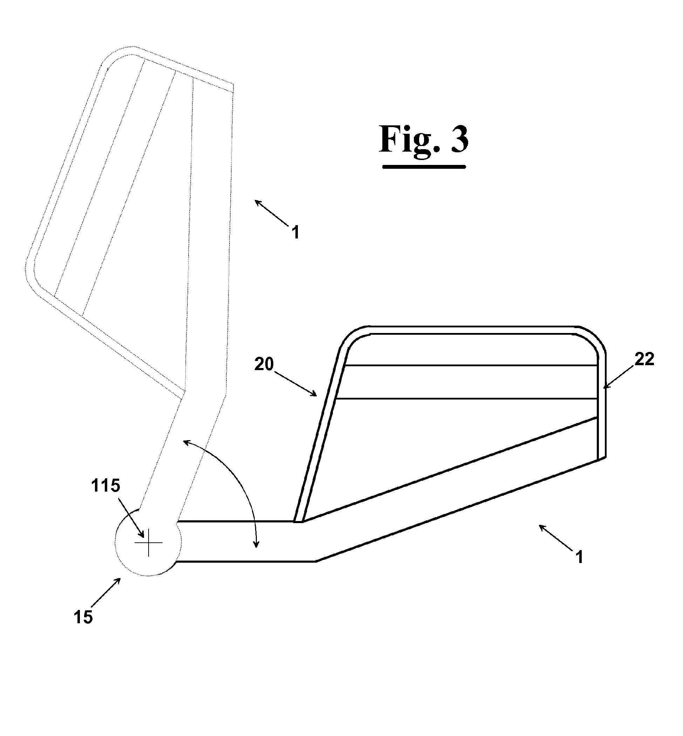

- Fig. 3 diagrammatically shows an elevational side view of the structure of safety gate of Fig. 1 for highlighting some features;
- Figs. 4 and 5 diagrammatically show in an elevational top plan view an exemplary embodiment of the structure of gate of Fig. 3, respectively in a removed configuration and in an assembled configuration;
- Fig. 6 shows the structure of the gate of Fig. 4 in an exploded perspective view for highlighting the main parts;
- Fig. 7 shows an elevational side view of an exemplary embodiment of the structure of gate of Fig. 3 in a closed configuration;
- Fig. 8 shows a portion of the structure of gate of Fig. 7 in an open configuration;
- Fig. 9 shows a perspective view of a portion of another exemplary embodiment of the structure of gate of Fig. 1 for highlighting some components;
- Fig. 10 shows a perspective view of a portion of a further exemplary embodiment of the structure of gate of Fig. 1 for highlighting the main components;
- Figs. 11 and 12 diagrammatically show a locking device provided in the exemplary embodiment of Fig. 10 respectively in a locked and unlocked configuration;
- Fig. 13 shows an exploded perspective view of still another exemplary embodiment of the structure of gate of Fig. 1.

### Detailed description of some exemplary embodiments

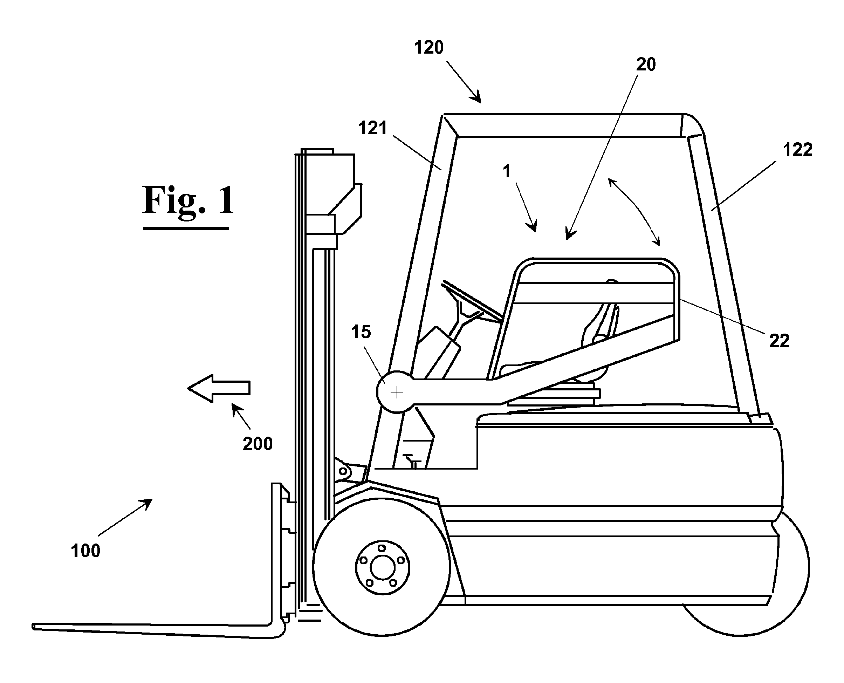

In Fig. 1 a structure of a safety gate 1 for a forklift truck 100, or similar transport vehicle, is diagrammatically shown. Forklift truck 100 is movable, in operating conditions, along a conveying direction 200, and it has a protection cabin 120 comprising a couple of front uprights 121 and a couple of rear uprights 122 arranged at opposite sides with respect to a driver seat 50.

Protection cabin 120 also comprises a protection roof 125 installed on the couple of front uprights 121 and of the couple of rear uprights 122, in order to result located above the driver seat 50.

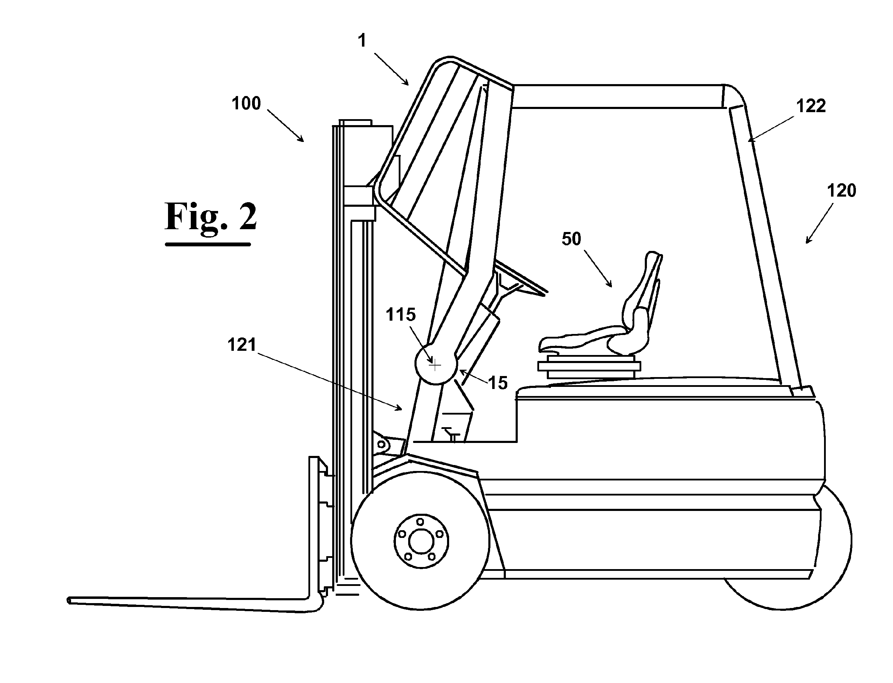

Safety gate 1 comprises, in particular, a protection portion 20 and is provided with a tilting device 15 arranged to engage with protection portion 20 cantilevered from front upright 121. Moreover, tilting device 15 pivotally connects protection portion 20 to front upright 121 of protection cabin 120. More in detail, tilting device 15 is configured in such a way to cause a rotation of protection portion 20 about a rotation axis 115 substantially horizontal and orthogonal to the running direction. The above described rotation is adapted to bring, in particular, protection portion 20 between an open configuration, in which protection portion 20 is in a position which allows the access to the driver seat 50, in particular in a substantially vertical position (Fig. 2), and a closed configuration, in which protection portion 20 is arranged laterally with respect to the driver seat 50 (Fig. 1). Protection portion 20 has an edge 22 opposite to tilting device 15 and has a length such that when protection portion 20 cantilevers in the closed configuration, edge 22 is located between the driver seat 50 and rear upright 122 (see Fig. 1).

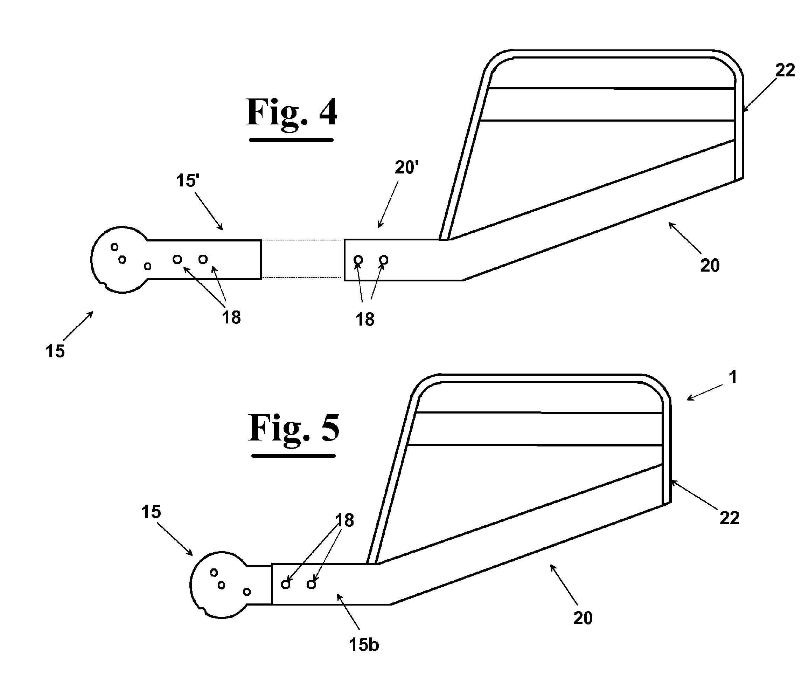

In the exemplary embodiment diagrammatically shown in Figs. 4 to 7, tilting device 15 comprises a fixed part 15a integral, in use, to front upright 121 and a movable part 15b, integral to protection portion 20 and pivotally connected to fixed part 15a. In particular, the rotation of movable part 15b about its axis 115 causes the rotation of protection portion 20 about its horizontal rotation axis 115.

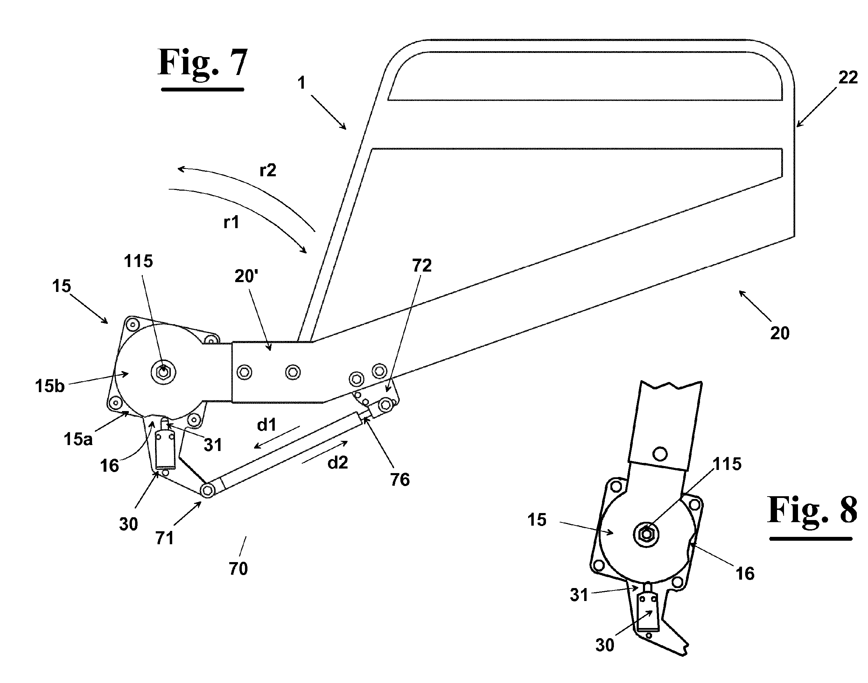

In hollow body 75 a stem 76 is slidingly mounted, having an end 72 connected to the protection portion 20. Therefore, stem 76 of the actuator 70 is adapted to translate in hollow body 75 in a first direction d1 for causing the rotation about the horizontal axis in a first direction of rotation r1, for bringing protection portion 20 from the open configuration to the closed configuration, and to translate in a second direction d2 opposite to the first direction d1 for causing the rotation of protection portion 20 about the horizontal axis 115 in a second direction of rotation r2 opposite to the first direction of rotation and causing it to move from the closed configuration to the open configuration (Fig. 7).

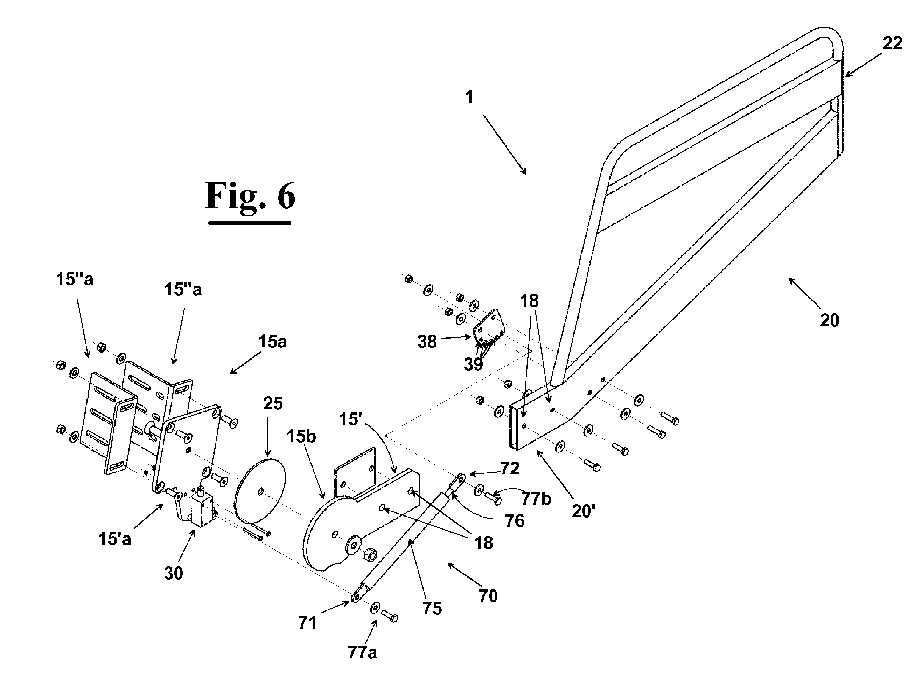

As shown, for example in Figs. 6 and 7, tilting device 15 can provide an actuator 70, of hydraulic or pneumatic type. The actuator 70 has a hollow body 75 integral to front upright 121, for example at one end 71. As shown in Figs. 6 and 7, the end 71 of the actuator 70 can be fastened, for example by a bolt 77a, or similar connection element, to a fastening plate 15'a that is connected to front upright 121 of the cabin by means of a couple of brackets 15a". The other end of the actuator 70, i.e. the end 72, is connected to protection portion 20 by means of a bolt 77b, or similar connection element. More in detail, the end 72 is connected to protection portion 20 by means of a plate 38, for example shaped as a sector of a circle, having a plurality of holes 39 in order to assist assembling the different portions.

Still with reference to Fig. 6, between plate 15a' of fixed part 15a and movable part 15b of tilting device 15 a thickness of nylon, or similar material can be arranged.

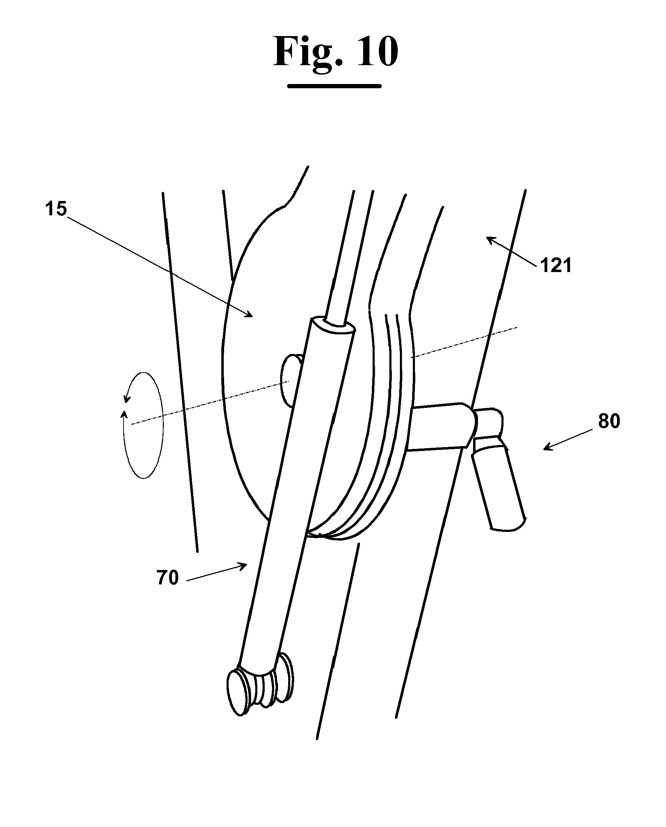

In an exemplary embodiment of the invention, shown in particular in Figs. 10 to 12, a locking device 80 is provided arranged to block the rotation of movable part 15b with respect to fixed part 15a of the tilting device 15, in order to prevent, in particular, from accidentally opening safety gate 1.

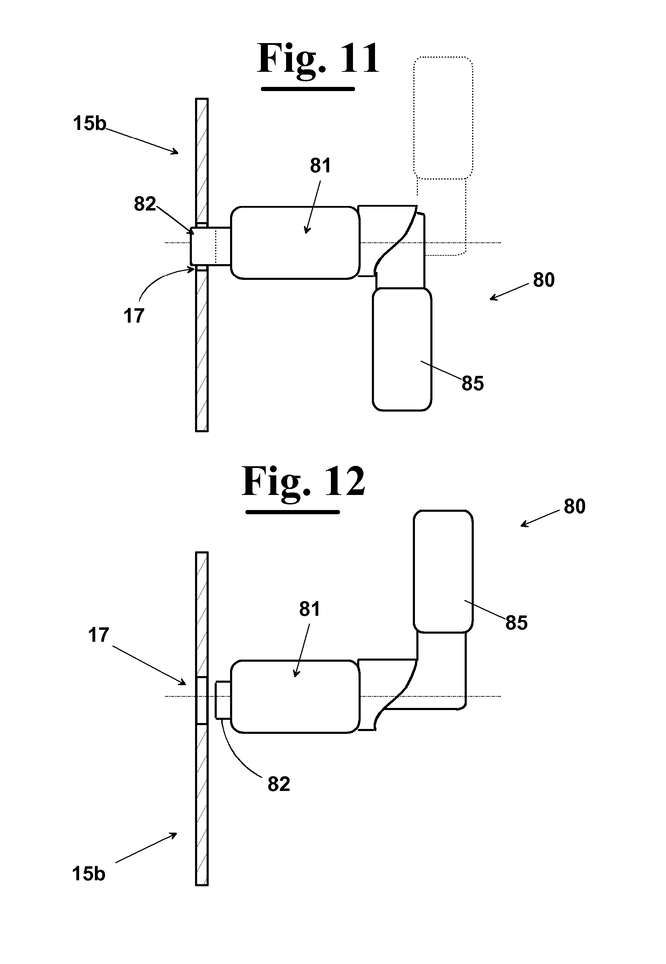

As diagrammatically shown in Figs. 11 and 12, the locking device 80 can provide, for example, a main body 81 integral, in use, to front upright 121, for example connected to fixed part 15a of the tilting device 15, and an elongated element 82 movable with respect to the main body 81 between an advanced position (Fig. 11) in which a housing 17 engages that is obtained in movable part 15b, and then prevents movable part 15b from rotating with respect to fixed part 15a, and a withdrawn position (Fig. 12) in which does not engage the housing 17 and therefore allows the rotation of movable part 15b with respect to fixed part 15a. The locking device 80 can be of manual type and can comprise, for example, a handle 85 on which the driver can act for causing the movement of the elongated element 81 from the actual advanced position to the withdrawn position, or vice-versa.

In an exemplary embodiment, not shown in the figures, advantageously, the locking device is configured to avoid the sliding of stem 76 with respect to the hollow body 75, and therefore the rotation of protection portion 20 about the horizontal axis 115, in particular when protection portion 20 is arranged in the closed configuration. For example, the locking device in this case can be integrated in actuator 7.

If the locking device 80 can be of automatic type, and can be associated with an unlock means, for example a resilient return means, not shown in the figures. In particular, the unlock means can be adapted to deactivate the locking device, and then to unlock the sliding of stem 76 with respect to hollow body 75 and therefore the rotation of protection portion 20 about its axis 115.

In case of unlock means, or return resilient means, they can be operated by exerting a push, for example by the driver of vehicle 100, on gate 1 in the direction which causes, starting from the closed configuration, an additional rotation of protection portion 20 about the horizontal axis 115 in the second direction of rotation. Such operation causes a click of the resilient means, for example a spring, which deactivates the locking device and allows again stem 76 to slide with respect to hollow body 75, thus allowing protection portion 20 to return to the open configuration of Fig. 1.

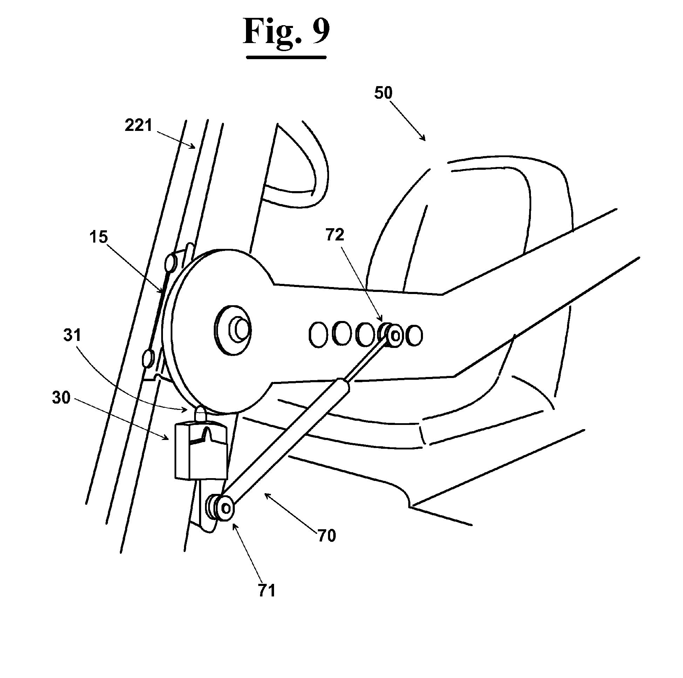

As diagrammatically shown in Figs. 6 to 9, the structure of gate 1 can be equipped with an actuation device 30 operatively connected to a starting means of vehicle 100, i.e. a device that starts or turns off vehicle 100. The actuation device 30 is configured to permit the starting means to start vehicle 100 only when protection portion 20 is arranged in the closed configuration and, instead, to prevent the starting means to start vehicle 100 when protection portion 20 is arranged in the open configuration.

In the exemplary embodiment of Figs. 6 to 9, the actuation device 30 comprises a switch integral to front upright 121 and electrically connected to the start starting means vehicle 100. In this case movable part 15b of tilting device 15 that causes the movement of switch 30 between a start configuration in which it allows the start starting means vehicle 100, and a turn off configuration, in which it prevents the start means from starting vehicle 100 same.

More in detail, movable part 15b of tilting device 15 has an activation portion 16 at a predetermined angular position. When protection portion 20 is in the closed configuration (Fig. 7), the activation portion 16 is arranged at switch 30 and then the outer surface of movable part 15b is detached from a feeler pin 31 of switch 30. In this operating situation switch 30 is in the on configuration and prevents the starting means from starting vehicle 100. When, instead, protection portion 20 is arranged in the open configuration (Fig. 8), the activation portion 16 is not arranged at switch 30. Therefore, the feeler pin 31 is in contact with the outer surface of movable part 15b and, accordingly, switch 30 is arranged in the off configuration. Therefore, in this operating situation switch 30 allows starting means to start vehicle 100.

In the figures 7 and 8, the activation portion 16 is a receding portion obtained on movable part 15b of the tilting device. However, the activation portion 16 can be also a protruding portion, or a sensor configured to measure the presence of switch 30 is arranged at the above described angular position.

As shown in particular in Figs. 4, 5, 6 and 13, protection portion 20 of safety gate 1 and movable part 15b of tilting device 15 are two distinct bodies. More in detail, protection portion 20 and movable part 15b of tilting device 15 comprise respective engagement portions 20' and 15' that, in use, are configured to engage with each other, for example telescopically. At least one connection element is then provided, for example a bolt, arranged to fasten the above described engagement portions 20' and 15' at respective holes 18 for engaging the in a predetermined relative position.

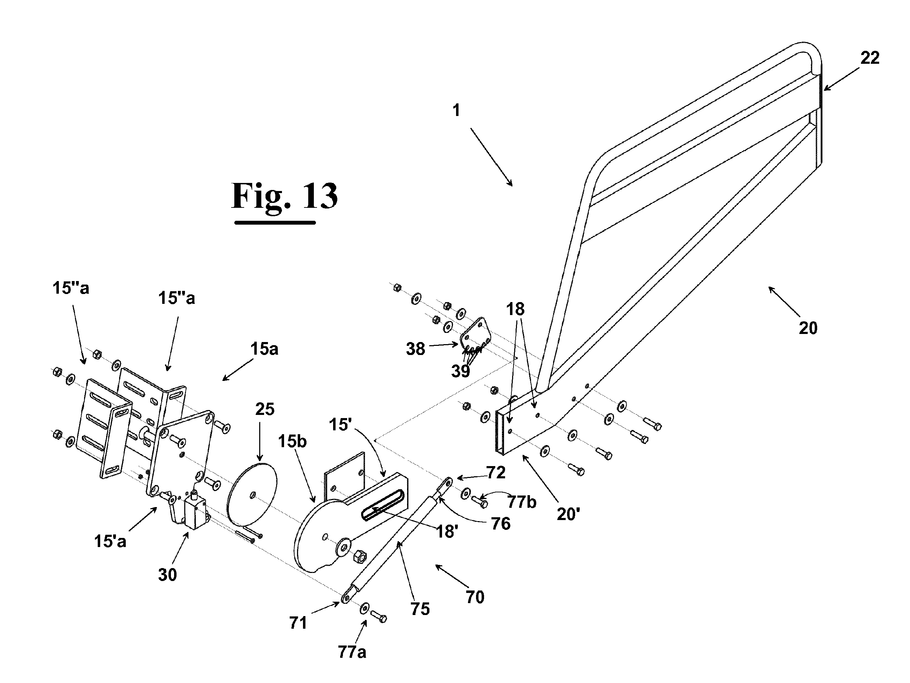

In the exemplary embodiment of Fig. 13, the engaging portion 15' of movable part 15b of tilting device 15 has an elongated hole 18'. In this case, it is therefore possible to arrange the engaging portion 20' of protection portion 20 in many positions with respect to the engaging portion 15' of movable part 15b and fastening the two parts with respect to each other with the, or each, connection element at a predetermined relative position, corresponding to a predetermined length of the protection portion 20. This way, it is possible to adjust the length of the gate 1 and fit it to different sizes of vehicle 100, in order to arrange edge 22 of protection portion 20 between the seat 50 and rear upright 122 for the above described reasons.

The foregoing description of specific exemplary embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to realise the different functions described herein could have a different nature without, for this reason, departing from the field of the invention. It is to be understood that the phraseology or terminology that is employed herein is for the purpose of description and not of limitation.

## Claims

1. Structure of safety gate (1) for a forklift truck (100), or similar transport vehicle, said forklift truck (100) having a protection cabin (120) comprising a couple of front uprights (121) and a couple of rear uprights (122) arranged at opposite sides with respect to a driver seat (50);
said safety gate (1) comprising a protection portion (20);
**characterized in that** it comprises a tilting device (15) arranged to cantilever said protection portion (20) from said front upright (121);
**in that** said tilting device (15) pivotally connects said protection portion (20) to said front upright (121) of said protection cabin (120);
**in that** said tilting device (15) is configured in such a way to cause a rotation of said protection portion (20) about a substantially horizontal rotation axis (115), between an open configuration, in which said protection portion (20) is arranged in a substantially vertical position, and a closed configuration, in which said protection portion (20) is arranged laterally with respect to said driver seat (50);
**in that** said protection portion (20) has an edge (22) opposite to said tilting device (15)
and **in that** said protection portion (20) has a length such that, when said protection portion (20) cantilevers in said closed configuration, said edge (22) is located between said driver seat (50) and said rear upright (122).

2. Improved structure of safety gate for a forklift truck (100), according to claim 1, wherein said tilting device (15) comprises:
- a fixed part (15a) integral, in use, to said front upright (121);
- a movable part (15b) arranged to be pivotally connected to said fixed part (15a) about said horizontal rotation axis (115), said movable part being (15b) integral to said protection portion (20).

3. Improved structure of safety gate for a forklift truck (100), according to claim 1, wherein said tilting device (15) comprises an actuator equipped with:
- a hollow body connected from said front upright;
- a stem having an end slidingly mounted in said hollow body and another end connected to said protection portion (20), said stem of said actuator arranged to translate in said hollow body in a first translation direction for causing said rotation about said horizontal axis in a first direction of rotation for bringing said protection portion (20) from said open configuration to said closed configuration, and to translate in a second translation direction which is opposite to the first direction for causing said rotation about said horizontal axis in a second direction of rotation opposite to the first direction of rotation for bringing said protection portion (20) from said closed configuration to said open configuration.

4. Improved structure of safety gate for a forklift truck (100), according to claim 3, wherein said actuator is associated with a locking device arranged to block said rotation of said protection portion (20) about said horizontal axis, when said protection portion (20) is in said closed configuration, to avoid an accidental opening of the protection portion (20).

5. Improved structure of safety gate for a forklift truck (100), according to claim 4, wherein said locking device is adapted to block said sliding of said stem with respect to said hollow body.

6. Improved structure of safety gate for a forklift truck (100), according to claim 4, wherein said movable part has a housing (17) and said locking device (80) comprises a main body (81) integral to said front upright (121) and an elongated element (82) movable with respect to said main body (81), said elongated element (81) being movable between an advanced position in which it engages said housing (17) and prevents said movable part (15b) from rotating with respect to said fixed part (15a), and a withdrawn position in which it is outside of said housing (17) and therefore does not prevent said movable part (15b) from rotating with respect to said fixed part (15a).

7. Improved structure of safety gate for a forklift truck (100), according to any of claims from 3 to 6, wherein said locking device has a resilient return means arranged to unlock said sliding of said stem (76) with respect to said hollow body (75), and then said rotation of said protection portion (20), said resilient return means being operated for pushing said protection portion (20) in a direction adapted to cause an additional rotation of said protection portion (20) in said direction of rotation, when said protection portion (20) is in said closed configuration.

8. Improved structure of safety gate for a forklift truck (100), according to claim 1, wherein an actuation device (30) is further provided operatively connected to a starting means arranged to start said vehicle (100), said actuation device configured to be arranged between a start configuration, in which it allows to said start starting means said vehicle (100) when said protection portion (20) is in said closed configuration, and a turn off configuration, in which the actuation device prevents, instead, said start means from starting said vehicle (100) when said protection portion (20) is in said open configuration.

9. Improved structure of safety gate for a forklift truck (100), according to claim 8, wherein said actuating means (30) comprises a switch integral to said front upright (121) and electrically connected to said starting means said vehicle, said movable part (15b) of said tilting device (15) arranged to cause the movement of said switch (30) between said start configuration and said turn off configuration.

10. Improved structure of safety gate for a forklift truck (100), according to claims 2 and 9, wherein said movable part (15b) at a predetermined angular position has an activation portion (16), said angular position being such that said movable part (15b) is adapted to operate said switch (30) for turning it into said start configuration of said vehicle (100) when said protection portion (20) is in said closed configuration.

11. Improved structure of safety gate for a forklift truck (100), according to claim 5, wherein said activation portion is selected from the group consisting of:
- a recessed portion;
- a protruding portion.

12. Improved structure of safety gate for a forklift truck (100), according to claim 1, wherein said protection portion (20) of said safety gate (1) and said movable part (15b) of said tilting device (15) are two distinct bodies, said protection portion (20) and said movable part (15b) of said tilting device (15) comprising respective engagement portions (20', 15') that, in use, are configured to engage with each other and at least one connection element is provided arranged to fasten said engagement portions in a predetermined relative position.

13. Improved structure of safety gate for a forklift truck (100), according to claim 1, wherein an engaging portion (20', 15') between said engaging portion (20') of said protection portion (20) and said engaging portion (15') of said movable part (15b) has a elongated hole (18'), such that said connection element is adapted to fasten said engagement portions (15', 20') of said movable part and of said protection portion (20) at a predetermined relative position corresponding to a predetermined length of said protection portion (20).

14. Structure of forklift truck (100), or similar transport vehicle, **characterized in that** at least one safety gate (1) is provided according to any of claims from 1 to 13.
